# EUROPÄISCHE PATENTSCHRIFT

(11) **EP 0 946 945 B1**
(45) Veröffentlichungstag und Bekanntmachung des Hinweises auf die Patenterteilung: **31.08.2005**
(21) Anmeldenummer: 97954369.1
(22) Anmeldetag: 09.12.1997
(51) Int. Cl.: G21C 1/09

(54) **DRUCKHALTER MIT SPRÜHVORRICHTUNG**
PRESSURE-KEEPING SYSTEM WITH A SPRAYING DEVICE
SYSTEME DE MAINTIEN DE PRESSION AVEC DISPOSITIF DE PULVERISATION

(30) Priorität: 20.12.1996 DE 19653526
(43) Veröffentlichungstag der Anmeldung: 06.10.1999
(73) Patentinhaber: Framatome ANP GmbH, 91058 Erlangen (DE)
(72) Erfinder: CONRADS, Hermann-Josef, D-91074 Herzogenaurach (DE); LAURER, Erwin, D-91096 Möhrendorf (DE); MODEL, Jürgen, D-91056 Erlangen (DE); FÄSER, Karl, D-91088 Bubenreuth (DE)
(74) Vertreter: Tergau & Pohl Patentanwälte
(86) Internationale Anmeldenummer: PCT/EP1997/006880
(87) Internationale Veröffentlichungsnummer: WO 1998/028751

(56) Entgegenhaltungen:
- EP-A- 0 058 836
- US-A- 3 164 174
- US-A- 4 124 067
- PATENT ABSTRACTS OF JAPAN vol. 097, no. 003 & JP 08 304588 A (MITSUBISHI HEAVY IND LTD), 22.November 1996,

## Beschreibung

Die Erfindung betrifft einen Druckhalter mit einem Gehäuse, in dem eine Volumenausgleichsleitung und eine Sprühleitung enden.

Beispielsweise ist aus der US 3,164,174 ein Druckhalter mit einem Gehäuse bekannt, in dem eine Sprühleitung endet. Derartige Druckhalter sind in einem Kernkraftwerk mit Druckwasserreaktor üblich. Dort sind sie an einen vom Reaktor kommenden Zweig des Primärkreises angeschlossen. Im Druckhalter befindet sich ein Sprühsystem, das mit Wasser aus einer vom Dampferzeuger zum Reaktor führenden Leitung des Primärkreises bespeist wird. Das über das Sprühsystem eingebrachte Wasser ist also relativ kalt im Vergleich zu dem Wasser, das sich im Druckhalter befindet. Das Sprühsystem ist in der Regel durch Sprühventile verschlossen. Nur dann, wenn im Druckhalter ein zu hoher Druck entstanden ist, werden die Sprühventile geöffnet und es wird durch das Einsprühen von relativ kaltem Wasser der Druck im Druckhalter abgesenkt. Der Ventilkegel eines der Sprühventile kann jedoch auch eine kleine Bohrung aufweisen, so daß auch bei geschlossenem Sprühventil ständig etwas Wasser in den Druckhalter eingesprüht wird.

Bisher war es üblich, die Sprühleitungen über einen sogenannten Sprühdeckel, der auf einem zentral angeordneten Flansch an der oberen Kalotte des Druckhalters aufgeschraubt ist, in das Innere des Druckhalters hineinzuführen. Dazu verlaufen die Sprühleitungen vom Primärkreis aus zunächst nach oben und dann nach einer Biegung oberhalb des Druckhalters nach unten in den Druckhalter hinein.

Damit das eingesprühte relativ kalte Wasser nicht auf die heiße Wand des Druckhalters trifft, was zu unerwünschten Temperaturtransienten führen würde, die eine Materialermüdung zur Folge hätten, war bisher ein sogenanntes Sprühhemd erforderlich. Dieses Sprühhemd ist ein oben und unten offener Blechzylinder, der konzentrisch im Druckhalter angeordnet ist. Das eingesprühte Wasser trifft dann auf die Innenwand dieses Blechzylinders, ohne die druckführende Gehäusewand zu beaufschlagen.

Sprühleitungen bestehen aus austenitischem Stahl. Wegen ihres geringen Durchmessers ist es nicht möglich, Schweißnähte von innen zu beschleifen. Folglich kann ein Bruch einer Sprühleitung nicht vollständig ausgeschlossen werden. Für den Fall, daß eine Sprühleitung bricht, muß mit aufwendigen Mitteln ausgeschlossen werden, daß ausschlagende Leitungsteile oder ein austretender Dampfstrahl sekundäre Schäden im Kraftwerk verursachen.

Da die Sprühleitungen nach unten gerichtet in den Druckhalter hineingeführt sind, läuft zumindest der nach unten gerichtete Teil der Sprühleitungen bei geschlossenen Sprühventilen leer. Es kann dann vom Druckhalter aus Sattdampf in die Sprühleitungen eindringen und dort kondensieren. Das Kondensat fließt dann wieder in den Druckhalter hinein und macht für neuen Sattdampf Platz. Zumindest der nach unten gerichtete Abschnitt einer Sprühleitung wird also nach dem Prinzip der klassischen Dampfheizung ständig geheizt. Das Einspeisen von relativ kaltem Wasser im Anforderungsfall kann dann wegen der Temperaturunterschiede zu einer Materialermüdung an den Sprühleitungen führen. Falls die Sprühventile oberhalb des Druckhalters angeordnet sind, erreicht der Sattdampf auch die Sprühventile und kann dort in gleicher Weise Schäden verursachen. Da der Sattdampf im Druckhalter radioaktiv ist, kommt es außerdem zu einer Strahlenbelastung der Sprühleitungen und auch der Sprühventile.

Der Erfindung liegt die Aufgabe zugrunde, einen Druckhalter mit Sprühsystem anzugeben, mit dem sicherheitstechnisch relevante Einrichtungen des Kraftwerkes nicht durch einen Bruch einer Sprühleitung (ausschlagende Leitungsteile, Dampfstrahl) beschädigt werden können. Darüber hinaus soll kein Teil einer Sprühleitung und auch kein Sprühventil durch Temperaturschwankungen oder Strahlenbelastung in seiner Stabilität beeinträchtigt werden.

Die Aufgabe wird gemäß der Erfindung dadurch gelöst, daß die Sprühleitung im unteren Bereich des Gehäuses des Druckhalters durch dessen Wand hindurchgeführt und innerhalb des Gehäuses nach oben verlaufend angeordnet ist, und daß die Sprühleitung an ihrem geodätisch höchsten Punkt endet.

Damit wird insbesondere der Vorteil erzielt, daß die Sprühleitung gegenüber ihrer Umgebung nur einem minimalen Differenzdruck ausgesetzt ist. Ein Bruch einer Sprühleitung innerhalb des Druckhalters braucht folglich nicht unterstellt zu werden. Selbst wenn es zu einem Bruch käme, wären wegen des minimalen Differenzdrucks keine störenden auf einen Rückstoß zurückzuführende Bewegungen von Sprühleitungsteilen zu erwarten. Schon deshalb, weil die Sprühleitung fast ausschließlich innerhalb des Druckhalters verläuft, ist die Gefahr eines Sekundärschadens durch einen Leitungsbruch außerhalb des Druckhalters minimiert.

Dadurch, daß die Sprühleitung an ihrem geodätisch höchsten Punkt endet, kann bei verschlossener Sprühleitung kein Wasser mehr aus der Sprühleitung in den Druckhalter abfließen. Die Sprühleitung bleibt bis zu ihrer Öffnung im Druckhalter mit Wasser gefüllt. Insbesondere ist auch ein außerhalb des Druckhalters angeordnetes Sprühventil ständig mit Wasser gefüllt. Es kann also kein Sattdampf in die Sprühleitung und zum Sprühventil vordringen, was zu Temperaturschwankungen führen würde. Dadurch wird der Vorteil erzielt, daß Belastungen des Sprühsystems durch Temperaturschwankungen und auch durch Strahlenbelastung deutlich reduziert werden.

Durch die Anordnung der Sprühleitung innerhalb des Druckhalters wird auch der Vorteil erzielt, daß an dem relativ kurzen Teilstück der Sprühleitung, das sich noch außerhalb des Druckhalters befinden muß, nur wenige Schweißnähte erforderlich sind, an denen ein Leitungsbruch nicht völlig auszuschließen ist. Innerhalb des Druckhalters braucht die Sprühleitung vorteilhafterweise nur eine relativ kleine Wanddicke zu haben, da der Differenzdruck zwischen dem Inneren der Sprühleitung und deren Umgebung klein ist.

Beispielsweise weist die Sprühleitung im Bereich ihres höchsten Punktes eine oder mehrere Sprühdüsen auf. Dadurch wird eingespeistes Wasser im Druckhalter gut verteilt.

Ein mit einer oder mehreren Sprühdüsen versehenes Teilstück der Sprühleitung ist beispielsweise schräg nach oben ausgerichtet. Auf diese Weise bleibt die Sprühleitung bei geschlossenem Sprühventil bis zu den Sprühdüsen hin mit Wasser gefüllt. Während des Sprühens wird aber eine gute Verteilung des Wassers gewährleistet.

Die Sprühleitung ist beispielsweise in einem unteren zylindrischen Teil des Gehäuses des Druckhalters durch dessen Wand schräg zur Wand hindurchgeführt. Nach einem anderen Beispiel ist die Sprühleitung in einem unteren zylindrischen Teil des Gehäuses durch dessen Wand senkrecht zur Wand hindurchgeführt. Eine weitere besonders vorteilhafte Ausführungsform sieht vor, daß die Sprühleitung in einem das Gehäuse unten abschließenden kalottenförmigen Teil des Gehäuses durch dessen Wand senkrecht zur Wand hindurchgeführt ist. Diese zuletzt genannte Ausführungsform bringt den besonderen Vorteil, daß ein größtmögliches Teilstück der Sprühleitung im Druckhalter verläuft, wo die Druckleitung nur einer geringen Druckdifferenz zwischen innen und außen standhalten muß. Man kommt folglich über eine möglichst lange Strecke der Sprühleitung mit einer kleinen Wanddicke der Leitung aus. Die Sprühleitung ist also besonders wirtschaftlich herzustellen.

Beispielsweise ist die Sprühleitung durch die Wand des Gehäuses, dort einen Festpunkt bildend, hindurchgeführt. Dieser Festpunkt wirkt für den äußeren wie auch für den inneren Teil der Leitung. Damit wird der Vorteil erzielt, daß Bewegungen eines der beiden Teile der Sprühleitung nicht auf den anderen Teil übertragen werden können.

Da die Sprühleitungen aus austenitischem Werkstoff und der Druckhalter aus ferritischem Werkstoff bestehen, können unterschiedliche Wärmedehnungen auftreten. Das ist auch dann gegeben, wenn der Druckhalter innen mit einem austenitischen Werkstoff plattiert ist. Um Beschädigungen durch unterschiedliche Wärmedehnungen zu verhindern, können die Sprühleitungen im Inneren des Druckhalters so befestigt sein, daß Relativbewegungen der Sprühleitungen hinsichtlich des Druckhalters möglich sind.

Mit dem Druckhalter nach der Erfindung wird insbesondere der Vorteil erzielt, daß Beschädigungen der Sprühleitungen und damit auch Sekundärschäden durch gebrochene Sprühleitungen weitgehend ausgeschlossen sind.

Der Druckhalter mit Sprühsystem nach der Erfindung wird anhand der Zeichnung näher erläutert:
FIG 1 zeigt einen Druckhalter mit einer Sprüheinrichtung.
FIG 2 zeigt eine erste Ausführungsform für eine Durchführung einer Sprühleitung durch die Wand des Druckhaltergehäuses.
FIG 3 zeigt eine zweite Ausführungsform für eine Durchführung einer Sprühleitung.
FIG 4 zeigt eine dritte Ausführungsform für eine Durchführung einer Sprühleitung.

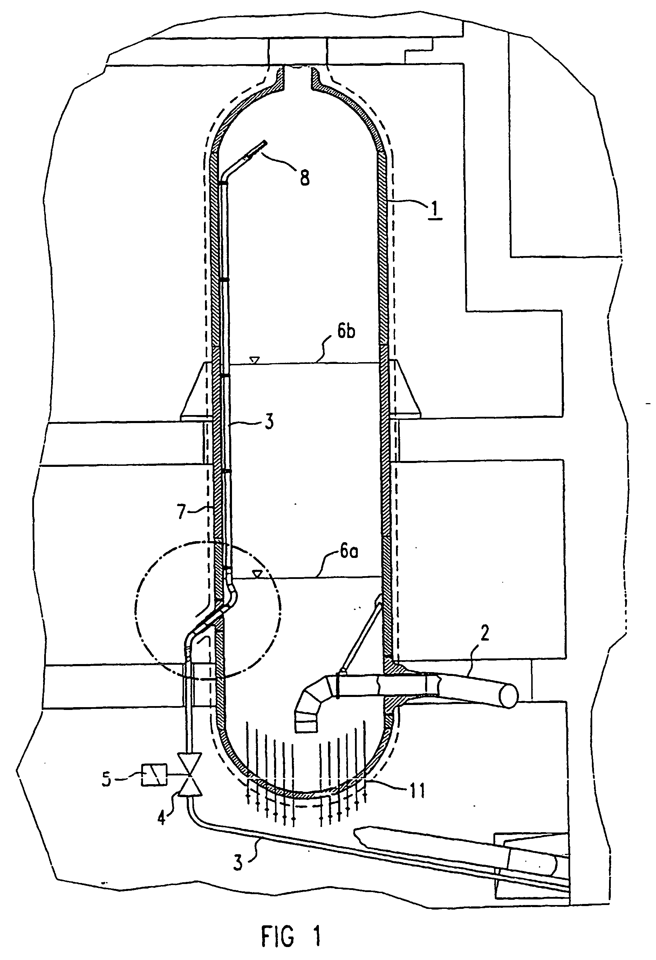

Figur 1 zeigt einen Druckhalter 1, der üblicherweise Bestandteil eines Kernkraftwerkes mit Druckwasserreaktor ist. Er steht dort über eine Volumenausgleichsleitung 2 mit dem heißen Teil des Primärkreises in Verbindung. Falls der Druck im Primärkreis zu hoch sein sollte, wird in den Druckhalter 1 Wasser eingesprüht, das vom kalten Teil des Primärkreises abgezweigt werden kann. Von dort geht dazu eine Sprühleitung 3 aus, die im Druckhalter 1 endet. Außerhalb des Druckhalters 1 ist in der Sprühleitung 3 ein Sprühventil 4 mit regelbarem oder AUF/ZU-Stellglied 5 angeordnet. Das Sprühventil 4 wird nach dem Druck im Primärkreis geregelt. Im Druckhalter 1 sind die Wasserpegel 6a, 6b für Nullast und Normalbetrieb des Kernkraftwerkes angegeben. Im unteren Abschnitt des Druckhalters 1 sind Heizstäbe 11 angeordnet.

Die Sprühleitung 3 verläuft von außerhalb des Gehäuses 7 des Druckhalters 1 kommend in einem unteren zylindrischen Teil des Gehäuses 7 schräg zu dessen Wand durch die Wand hindurch ins Innere des Gehäuses 7 hinein. Dort verläuft die Sprühleitung 3 ständig steigend nach oben und endet an ihrem geodätisch höchsten Punkt. Die Sprühleitung 3 wird an der Innenwand des Gehäuses 7 geführt. Im Bereich ihres höchsten Punktes weist die Sprühleitung 3 Sprühdüsen 8 auf. Dieses Teilstück, das die Sprühdüsen 8 aufweist, ist schräg nach oben ausgerichtet. Mit dieser Anordnung wird vorteilhafterweise Wasser vom oberen Bereich des Druckhalters 1 aus in diesen hineingesprüht. Trotzdem kann bei geschlossenem Sprühventil 4 kein Teil der Sprühleitung 3 zwischen dem Sprühventil 4 und den Sprühdüsen 8 leerlaufen. Folglich kann auch kein Dampf in die Sprühleitung 3 eindringen und dort kondensieren, und es kann nicht zu Temperaturschwankungen oder Strahlungsbelastungen in der Sprühleitung 3 kommen.

Insbesondere ist die Sprühleitung 3 innerhalb des Druckhalters 1 nur einer geringen Druckdifferenz zwischen ihrem Inneren und ihrem Äußeren ausgesetzt, so daß man mit einer relativ dünnen Sprühleitung 3 auskommt und trotzdem keinen Sprühleitungsbruch befürchten muß. Selbst bei einem unterstellten Bruch der Sprühleitung 3 innerhalb des Druckhalters 1 kann es wegen der geringen Druckdifferenz zu keinen durch Rückstoßeffekte verursachten Sekundärschäden kommen.

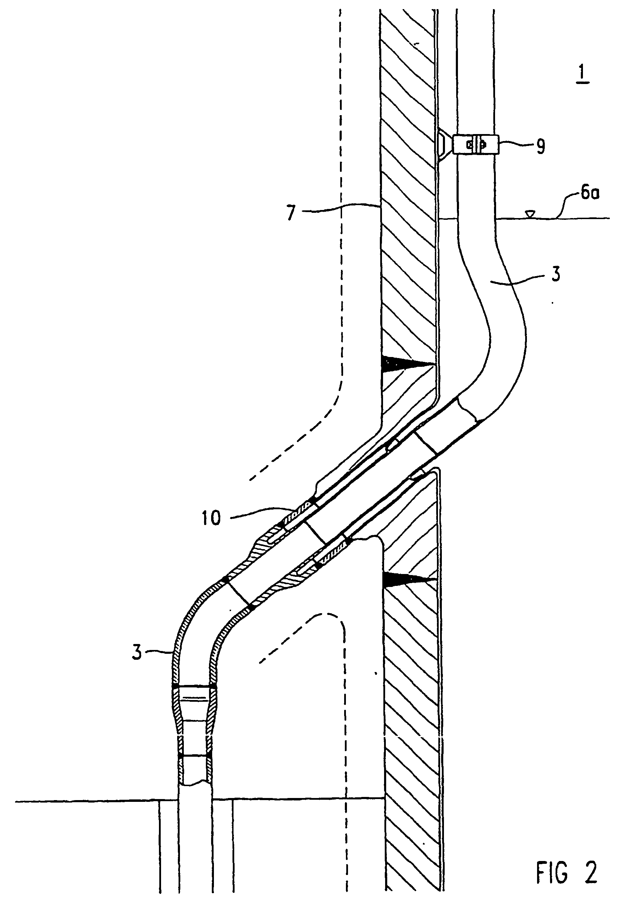

Figur 2 zeigt in einem Ausschnitt der Figur 1 die Konstruktion der schrägen Durchführung der Sprühleitung 3 durch die Wand des Gehäuses 7. Innerhalb des Gehäuses 7 ist die Sprühleitung 3 durch Schellen 9, die eine Axialbewegung, jedoch keine Verdrehung der Sprühleitung 3 zulassen, mit der Wand des Gehäuses 7 verbunden. Wegen der geringen Druckdifferenzen zwischen dem Innenraum und der Umgebung der Sprühleitung 3 kommt man innerhalb des Druckhalters 1 mit einer relativ dünnwandigen Sprühleitung 3 aus. Außerhalb des Druckhalters 1 ist eine größere Wandstärke erforderlich. Im Bereich der schrägen Durchführung ist ein Festpunkt 10 für die Sprühleitung 3 angeordnet.

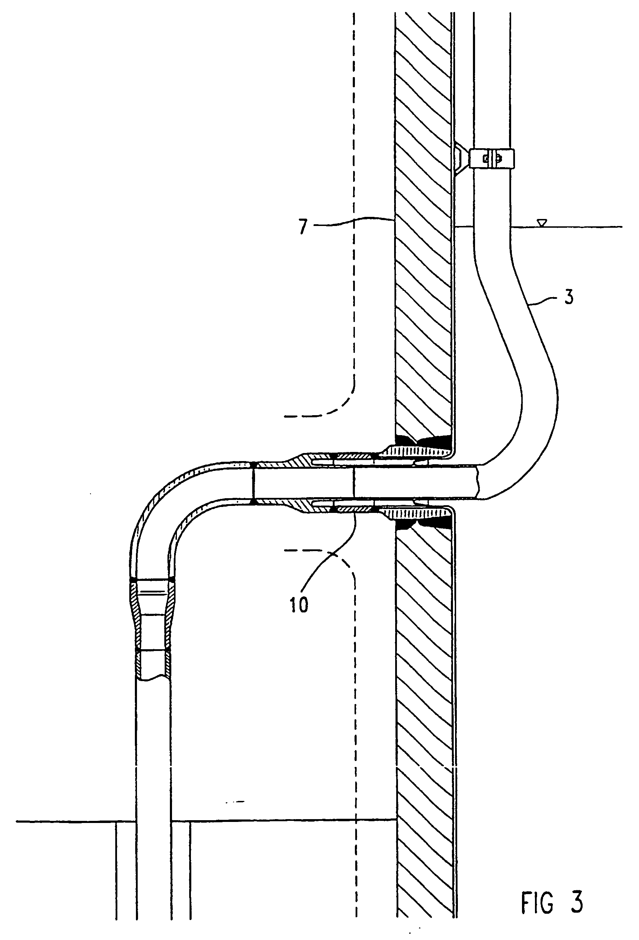

Figur 3 zeigt eine andere Ausführungsform für eine Durchführung der Sprühleitung 3 durch die Wand des Gehäuses 7. Sie unterscheidet sich von der Ausführungsform nach Figur 2 nur dadurch, daß die Sprühleitung 3 senkrecht zur Wand durch diese hindurchgeführt ist. Man benötigt eine im Vergleich zur Ausführungsform nach Figur 2 aufwendigere Leitungsführung, dafür aber nur eine relativ einfache Wanddurchführung.

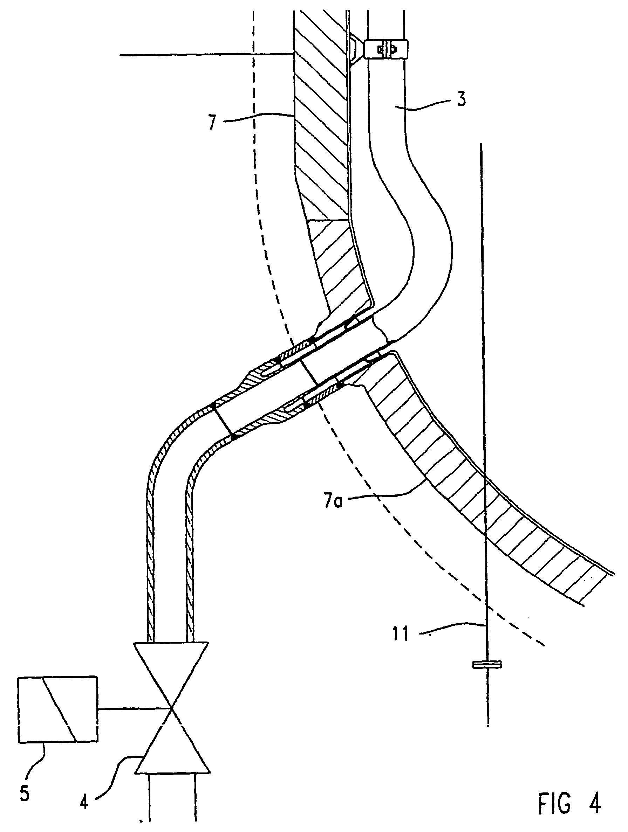

Figur 4 zeigt die vorteilhafteste Durchführung der Sprühleitung 3 durch die Wand des Gehäuses 7. In einem das Gehäuse 7 unten abschließenden kalottenförmigen Teil 7a des Gehäuses 7 ist die Sprühleitung 3 senkrecht zur Wand des Gehäuses 7 mit geringen Krümmungen hindurchgeführt. Bei dieser Ausführungsform ist die Sprühleitung 3 auch über eine größtmögliche Strecke in kostengünstiger, stabiler Form innerhalb des Druckhalters 1 angeordnet.

Direkt von unten kann die Sprühleitung 3 nämlich nicht in den Druckhalter 1 hineingeführt sein, da dort Heizstäbe 11 angeordnet sind, die auch in Figur 1 gezeigt sind.

## Patentansprüche

1. Druckhalter (1) mit einem Gehäuse (7), in dem eine Volumenausgleichsleitung (2) und eine Sprühleitung (3) enden,
**dadurch gekennzeichnet, daß** die Sprühleitung (3) im unteren Bereich des Gehäuses (7) durch dessen Wand hindurchgeführt und innerhalb des Gehäuses (7) nach oben verlaufend angeordnet ist, und daß die Sprühleitung (3) an ihrem geodätisch höchsten Punkt endet.

2. Druckhalter (1) nach Anspruch 1,
**dadurch gekennzeichnet, daß** die Sprühleitung (3) im Bereich ihres höchsten Punktes eine oder mehrere Sprühdüsen (8) aufweist.

3. Druckhalter (1) nach Anspruch 2,
**dadurch gekennzeichnet, daß** ein mit einer oder mehreren Sprühdüsen (8) versehenes Teilstück der Sprühleitung (3) schräg nach oben ausgerichtet ist.

4. Druckhalter (1) nach einem der Ansprüche 1 bis 3,
**dadurch gekennzeichnet, daß** die Sprühleitung (3) in einem unteren zylindrischen Teil des Gehäuses (7) durch dessen Wand schräg zur Wand hindurchgeführt ist.

5. Druckhalter (1) nach einem der Ansprüche 1 bis 3,
**dadurch gekennzeichnet, daß** die Sprühleitung (3) in einem unteren zylindrischen Teil des Gehäuses (7) durch dessen Wand senkrecht zur Wand hindurchgeführt ist.

6. Druckhalter (1) nach einem der Ansprüche 1 bis 3,
**dadurch gekennzeichnet, daß** die Sprühleitung (3) in einem das Gehäuse (7) unten abschließenden kalottenförmigen Teil (7a) des Gehäuses (7) durch dessen Wand senkrecht zur Wand hindurchgeführt ist.

7. Druckhalter (1) nach einem der Ansprüche 1 bis 6,
**dadurch gekennzeichnet, daß** die Sprühleitung (3) durch die Wand des Gehäuses (7) dort einen Festpunkt (10) bildend hindurchgeführt ist.

## Claims

1. Pressurizer (1), with a housing (7) in which a volume-compensating line (2) and a spray line (3) terminate, **characterized in that** the spray line (3) is led through the wall of the housing (7) in the lower region of the latter and is arranged within the housing (7) so as to run upwards, and **in that** the spray line (3) terminates at its geodetically highest point.

2. Pressurizer (1) according to Claim 1, **characterized in that** the spray line (3) has one or more spray nozzles (8) in the region of its highest point.

3. Pressurizer (1) according to Claim 2, **characterized in that** a portion of the spray line (3), the said portion being provided with one or more spray nozzles (8), is oriented obliquely upwards.

4. Pressurizer (1) according to one of Claims 1 to 3, **characterized in that** the spray line (3) is led through the wall of the housing (7) in a lower cylindrical part of the latter obliquely with respect to the wall.

5. Pressurizer (1) according to one of Claims 1 to 3, **characterized in that** the spray line (3) is led through the wall of the housing (7) in a lower cylindrical part of the latter perpendicularly with respect to the wall.

6. Pressurizer (1) according to one of Claims 1 to 3, **characterized in that** the spray line (3) is led through the wall of the housing (7), perpendicularly with respect to the wall, in a part (7a) of the said housing (7) which is in the form of a spherical cap and which closes off the latter at the bottom.

7. Pressurizer (1) according to one of Claims 1 to 6, **characterized in that** the spray line (3) is led through the wall of the housing (7) so as to form a fixed point (10) there.

## Revendications

1. Système (1) de maintien de la pression ayant une enveloppe (7) dans laquelle se termine un conduit (2) de compensation du volume et un conduit (3) de pulvérisation, **caractérisé en ce que** le conduit (3) de pulvérisation passe à travers la paroi de la partie inférieure de l'enveloppe (7) et est disposé dans l'enveloppe (7) en s'étendant vers le haut et **en ce que** le conduit (3) de pulvérisation se termine à son point géodésique le plus haut.

2. Système (1) de maintien de la pression suivant la revendication 1, **caractérisé en ce que** le conduit (3) de pulvérisation a une ou plusieurs buses (8) de pulvérisation dans la zone de son point le plus haut.

3. Système (1) de maintien de la pression suivant la revendication 2, **caractérisé en ce qu'**un tronçon du conduit (3) de pulvérisation muni d'une ou de plusieurs buses (8) de pulvérisation est incliné vers le haut.

4. Système (1) de maintien de la pression suivant l'une des revendications 1 à 3, **caractérisé en ce que** le conduit (3) de pulvérisation passe de manière inclinée par rapport à la paroi à travers la paroi d'une partie cylindrique inférieure de l'enveloppe (7).

5. Système (1) de maintien de la pression suivant l'une des revendications 1 à 3, **caractérisé en ce que** le conduit (3) de pulvérisation passe, perpendiculairement à la paroi, à travers la paroi d'une partie cylindrique inférieure de l'enveloppe (7).

6. Système (1) de maintien de la pression suivant l'une des revendications 1 à 3, **caractérisé en ce que** le conduit (3) de pulvérisation passe, perpendiculairement à la paroi, à travers la paroi de la partie (7a) en forme de calotte de l'enveloppe (7) fermant vers le bas l'enveloppe (7).

7. Système (1) de maintien de la pression suivant l'une des revendications 1 à 6, **caractérisé en ce que** le conduit (3) de pulvérisation passe à travers la paroi de l'enveloppe (7) en y formant un point (10) fixe.
